# EUROPEAN PATENT APPLICATION

(11) **EP 4 756 372 A1**
(43) Date of publication of application: **10.06.2026**
(21) Application number: 24216989.4
(22) Date of filing: 03.12.2024
(51) Int. Cl.: G01C 15/00

(54) **LASER LEVEL SYSTEM AND METHOD FOR VISUALIZING A REFERENCE LINE**

(71) Applicant: Hilti Aktiengesellschaft, 9494 Schaan (LI)
(72) Inventor: Felsberger, Franz, 7000 Chur (CH); Li, Alvina, 9470 Buchs (CH); Katti, Siddarth, 50480 Kuala Lumpur (MY)
(74) Representative: Hilti Aktiengesellschaft Corporate Intellectual Property

(57) **Abstract**

Laser level system and method for visualizing a reference line (RL) using a laser level system including a laser level (11) configured to emit a vertical laser beam (23), a rotation base (12) configured to rotate the laser level (11) about an axis of rotation, a receiver (13), and a computer system, the reference line (RL) being defined by a first reference point (P1), at which a zero line of the receiver (13) is placed, and a second reference point (P2), at which the axis of rotation of the rotation base (12) is placed, the method being performed by the computer system and comprising the steps:
▪ Awaiting an activator element to be applied,
▪ When the activator element has been applied, instructing the laser level (11) to emit the vertical laser beam (23), and
▪ Instructing the rotation base (12), that is motorized and to which the laser level (11) is connected, to rotate the laser level (11) about the axis of rotation until the vertical laser beam (23) is coincident with the zero line of the receiver (13), wherein the axis of rotation is coincident with the vertical laser beam (23).

## Description

The present invention relates to a method for visualizing a reference line using a laser level system according to the definition of claim 1, to a computer program according to the definition of claim 4, and to a laser level system according to the definition of claim 6.

### Background of the invention

Laser level systems including a laser level, a rotation base, a receiver and a computer system are generally used in construction and other fields.

US 2022/0326011 A1 discloses a laser level system providing vertical auto alignment functionality to visualize a reference line defined by a first reference point and a second reference point. The laser level system includes a laser level configured to emit a vertical laser beam, a motorized rotation base configured to be connected to the laser level and to rotate the laser level about an axis of rotation that is coincident with a central axis of the laser level, a receiver including a detector and a zero line, and a computer system configured to control the operation of the laser level, the rotation base, and the receiver.

The laser level system known from US 2022/0326011 A1 can be used to visualize a reference line that is defined by a first reference point, at which the receiver is placed, and a second reference point, at which the laser level is placed. For the operator it can be time consuming and error-prone to place the laser level and the rotation base such that the axis of rotation is coincident with the second reference point.

### Summary of the invention

Therefore, what is desired is a laser level system offering vertical auto alignment functionality to visualize a reference line that allows to visualize the reference line in a time efficient manner and/or with high accuracy.

These objectives are achieved by realizing the features of the independent claims. Features which further develop the invention in an advantageous manner are described in the dependent claims.

According to an aspect of the present invention, there is provided a method for visualizing a reference line using a laser level system including a laser level configured to emit a vertical laser beam, a rotation base configured to rotate the laser level about an axis of rotation, a receiver, and a computer system, the reference line being defined by a first reference point, at which a zero line of the receiver is placed, and a second reference point, at which the axis of rotation of the rotation base is placed, the method being performed by the computer system and comprising the steps:
▪ Awaiting an activator element to be applied,
▪ When the activator element has been applied, instructing the laser level to emit the vertical laser beam, and
▪ Instructing the rotation base, that is motorized and to which the laser level is connected, to rotate the laser level about the axis of rotation until the vertical laser beam is coincident with the zero line of the receiver, wherein the axis of rotation is coincident with the vertical laser beam.

The method according to the present invention allows to transfer a reference line between a first reference point and a second reference point by a single operator in a time efficient manner. The receiver is placed at the first reference point, such that its zero line is coincident with the first reference point. Then, the laser level and rotation base are placed at the second reference point, such that the axis of rotation is coincident with the second reference point. After applying the activator element, the laser level is rotated about the axis of rotation until the vertical laser beam is coincident with the zero line of the receiver.

When the vertical laser beam is coincident with the zero line, the reference line is visualized by the vertical laser beam. The reference line can be transferred by the operator to a floor, wall and/or ceiling using the laser level system according to the present invention; for visualizing the reference line, a surface of an environment is necessary.

A laser level system that provides an activator element to start a method for visualizing a reference line offers a high degree of automation. The activator element can be arranged at the laser level, the rotation base and/or the receiver, and can be formed as any operating element, such as a button configured to be pressed, a wheel configured to be rotated, or a rocker configured to be applied; the activator element can be formed as mechanical operating element or touch operating element. The concept of the present invention is independent of the form of the activator element and how it can be applied.

Preferably, when the activator element has been applied, the vertical laser beam is switched to a receiver mode that is different from a visibility mode of the vertical laser beam. By switching the vertical laser beam to a receiver mode, when the activator element has been applied, the vertical laser beam can be optimized to the receiver and the heat impact to the inside of the laser level can be reduced. While the laser level is rotated by the rotation base about the axis of rotation, the operator is not involved such that good visibility of the vertical laser beam is not required. When the vertical laser beam is coincident with the zero line of the receiver and the reference line should be transferred, the operator is involved, and the vertical laser beam should be optimized towards good visibility for the operator (visibility mode).

The receiver mode and visibility mode of the vertical laser beam may differ in the duty cycle. The lower the duty cycle is, the lower is the brightness of the laser beam and the lower is the heat impact to the inside of the laser level. Particularly for laser levels using green laser diodes, the heat impact to the inside of the laser level can increase the temperature above a threshold.

Preferably, the vertical laser beam is switched to a highlight mode, when the vertical laser beam is coincident with the zero line of the receiver. By switching the vertical laser beam to a highlight mode, when the vertical laser beam is coincident with the zero line of the receiver, the operator can be visually informed that the vertical laser beam is arranged coincidently with the reference line and can be transferred to a floor, wall and/or ceiling. In the highlight mode, the vertical laser beam can blink for several seconds before it is switched to a permanent laser line that is optimized for visualizing (visibility mode).

According to a further aspect of the present invention, there is provided a computer program comprising instructions, which, when executed by a computer system, cause the computer system to carry out the method for visualizing a reference line according to the present invention.

The computer program may be stored on the computer system or on a computer-readable medium communicatively connected to the computer system. The term "computer system" includes, but is not limited to, processing unit(s), microprocessor(s), controlling unit(s), microcontroller(s), and various other units capable of processing and/or controlling, and the term "computer-readable medium" includes, but is not limited to, portable or non-portable storage devices, optical storage devices, and various other mediums capable of storing, containing, or carrying instruction(s) and/or data.

According to a further aspect of the present invention, there is provided a laser level system comprising means for carrying out the method for visualizing a reference line according to the present invention.

According to a further aspect of the present invention, there is provided a laser level system configured to visualize a reference line defined by a first reference point and a second reference point, the laser level system comprising:
▪ a laser level configured to emit a vertical laser beam,
▪ a rotation base configured to be connected to the laser level, wherein the rotation base is motorized and configured to rotate the laser level about an axis of rotation,
▪ a receiver including a detector and a zero line, and
▪ a computer system configured to control the operation of the laser level, the rotation base, and the receiver,
characterized in that the axis of rotation is coincident with the vertical laser beam.

The laser level system according to the present invention allows that a single operator transfers a reference line in a time efficient manner and with high accuracy to a floor, wall and/or ceiling. The laser level system includes a laser level emitting a vertical laser beam, a motorized rotation base configured to rotate the laser level about an axis of rotation, a receiver configured to detect the vertical laser beam, and a computer system configured to control the operation of the laser level, rotation base, and receiver, particularly in a vertical auto alignment mode of the laser level system.

The vertical auto alignment according to the present invention requires that the axis of rotation, about which the vertical laser beam is rotated, is coincident with the vertical laser beam. By placing the laser level and rotation base such that the axis of rotation is coincident with the second reference point, the vertical laser beam can be rotated about the axis of rotation. When the vertical laser beam is coincident with the zero line of the receiver, the reference line is visualized by the vertical laser beam and can be transferred by the operator to a floor, wall and/or ceiling.

Preferably, the axis of rotation is arranged outside of a housing of the laser level and outside of a housing of the rotation base. The vertical laser beam and an additional vertical laser beam of the laser level are arranged perpendicular to each other and intersect each other at a vertical line. For the vertical auto alignment mode according to the present invention, the axis of rotation, about which the vertical laser beam is rotated, must be placed at the second reference point of the reference line. The vertical line, at which the vertical laser beam and the additional vertical laser beam intersect each other, is arranged coincident with the axis of rotation. Therefore, the axis of rotation can be placed by means of the vertical line at the second reference point with high accuracy and in a time efficient manner.

Preferably, the laser level system further includes an activator element that is configured to switch the laser level system to a vertical auto alignment mode, in which the computer system is configured to:
▪ Instruct the laser level to emit the vertical laser beam, and
▪ Instruct the rotation base to rotate the laser level about the axis of rotation until the vertical laser beam is coincident with the zero line of the receiver.

The vertical auto alignment mode that can be activated by applying the activator element allows to perform vertical alignment work by a single operator in a time efficient manner. The activator element can be arranged at the laser level, the rotation base, and/or at the receiver, and can be formed as any operating element, such as a button configured to be pressed, a wheel configured to be rotated, or a rocker configured to be applied; the activator element can be formed as mechanical operating element or touch operating element. The at least one activator element can include a first activator element arranged at the laser level or rotation base, and a second activator element arranged at the receiver. A laser level system that includes two activator elements to switch the laser level system to a vertical auto alignment mode allows to start the vertical auto alignment mode either at the tool side (laser level or rotation base) or at the receiver side.

Preferably, the at least one activator element is arranged at the laser level or the rotation base. The laser level system according to the present invention is used to visualize a reference line defined by a first and a second reference point. After visualizing, the reference line should be transferred by an operator to a floor, wall and/or ceiling, for example by creating a permanent mark using paint or chalk. An activator element that is arranged at the laser level or the rotation base can reduce the time the operator has to spend on walking between the receiver and the laser level. When the zero line of the receiver has been placed at the first reference point, the operator does not need to come back to the receiver. The vertical auto alignment mode can be activated and deactivated at the laser level or rotation base.

Preferably, the laser level system further includes at least one operating element that is configured to define a direction of rotation, in which the rotation base is instructed to rotate the laser level about the axis of rotation in the vertical auto alignment mode. When the operator can define the direction of rotation for the rotation base, the time that is required to find the receiver and arrange the vertical laser beam coincident with the zero line of the receiver can be reduced.

The at least one operating element can be arranged at the laser level, the rotation base, and/or at the receiver, and can be formed as any operating element, such as a button configured to be pressed, a wheel configured to be rotated, or a rocker configured to be applied; the operating element can be formed as mechanical operating element or touch operating element. The at least one operating element can include a first operating element to define a clockwise rotation and a second operating element to define a counterclockwise rotation about the axis of rotation in the vertical auto alignment mode, or the at least one operating element can be formed as wheel configured to be rotated to define clockwise or counterclockwise rotation or as rocker configured to be applied at a first end or a second end to define clockwise or counterclockwise rotation.

Preferably, the laser level system further includes at least one activator element that is configured to switch the laser level system to a first vertical auto alignment mode and/or to a second vertical auto alignment mode that is different from the first vertical auto alignment mode. The activator element can be arranged at the laser level, the rotation base, and/or at the receiver, and can be formed as any mechanical or touch operating element.

A laser level system that can be switched to different vertical auto alignment modes can have a high degree of automation. The first vertical auto alignment mode may allow to visualize a reference line, and the second vertical auto alignment mode may allow to visualize a right angle from a reference line using the laser level system according to the present invention.

The at least one activator element may include a first activator element configured to switch the laser level system to the first vertical auto alignment mode, and a second activator element configured to switch the laser level system to the second vertical auto alignment mode. Alternatively, the at least one activator element may be formed as wheel or rocker that allows to switch the laser level system either to the first vertical auto alignment mode or to the second vertical auto alignment mode.

### Brief Description of the drawings

The aspects of the invention are described or explained in more detail below, purely by way of example, with reference to working examples shown schematically in the drawing. Identical elements are labelled with the same reference numerals in the figures. The described embodiments are generally not shown true in scale, and they are also not to be interpreted as limiting the invention. Specifically,
- FIG. 1: shows a laser level system according to the present invention, the laser level including a laser level, a rotation base, a receiver and a computer system,
- FIGS. 2A, B: show the laser level and the rotation base of the laser level system of FIG. 1 in a side view (FIG. 2A) and in a top view (FIG. 2B),
- FIG. 3: shows the receiver of the laser level system of FIG. 1,
- FIG. 4: shows an indoor environment, at which the laser level system of FIG. 1 can be used to perform vertical alignment work, and
- FIGS. 5A-E: show schematically how reference lines can be transferred to the environment of FIG. 4 using the laser level system of FIG. 1.

### Detailed Description

Reference will now be made in detail to the present preferred embodiment, an example of which is illustrated in the accompanying drawings. It is to be understood that the technology disclosed herein is not limited in its application to the details of construction and the arrangement of components set forth in the following description or illustrated in the drawings. The technology disclosed herein is capable of other embodiments and of being practiced or of being carried out in various ways.

Also, it is to be understood that the phraseology and terminology used herein is for the purpose of description and should not be regarded as limiting. All definitions, as defined and used herein, should be understood to control over dictionary definitions, definitions in documents incorporated by reference, and/or ordinary meanings of the defined terms.

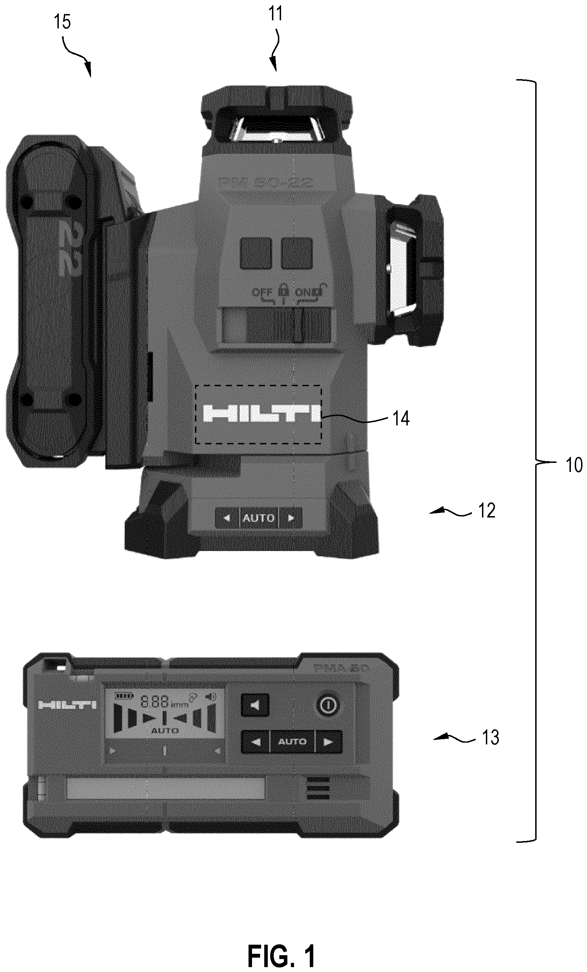

**FIG. 1** shows an exemplary version of a laser level system **10** according to the present application. This system is a self-leveling multi-line laser level that allows a single operator to transfer right angles, level horizontally, carry out alignment work and plumb accurately, it is designed for mainly indoor use. Typical applications are: Marking the position of partition walls at right angles and in the vertical plane, checking and transferring right angles, and aligning components to be installed or sections of a structure in three axes.

The laser level system 10 includes a laser level **11**, a rotation base **12**, a receiver **13**, and a computer system **14**. In the exemplary version, the laser level 11, the rotation base 12, and the computer system 14 are integrated in a laser level tool **15**. The receiver 13 and the laser level tool 15 can communicate bidirectionally in a wireless manner; the wireless communication may be WiFi, Bluetooth, etc.

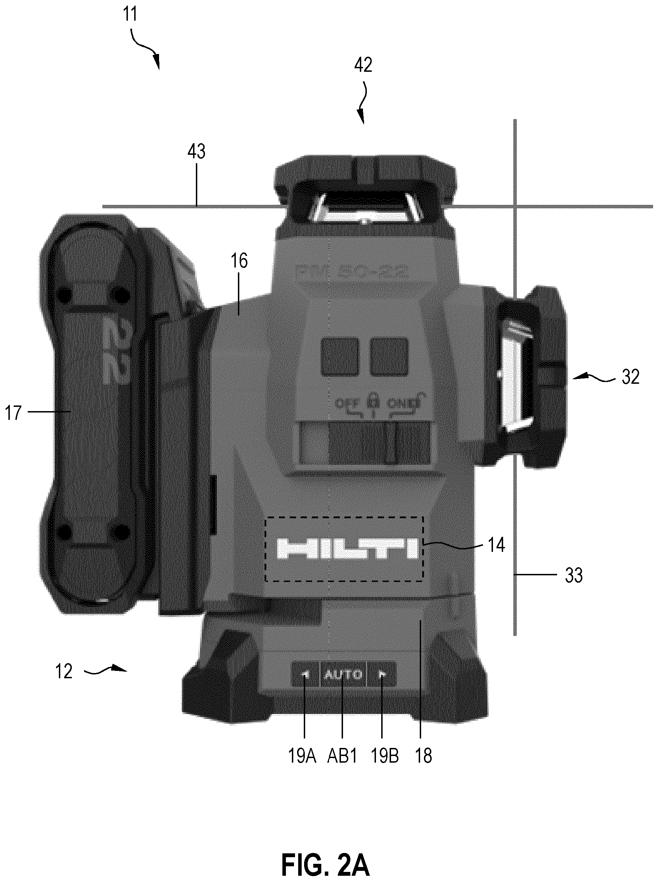

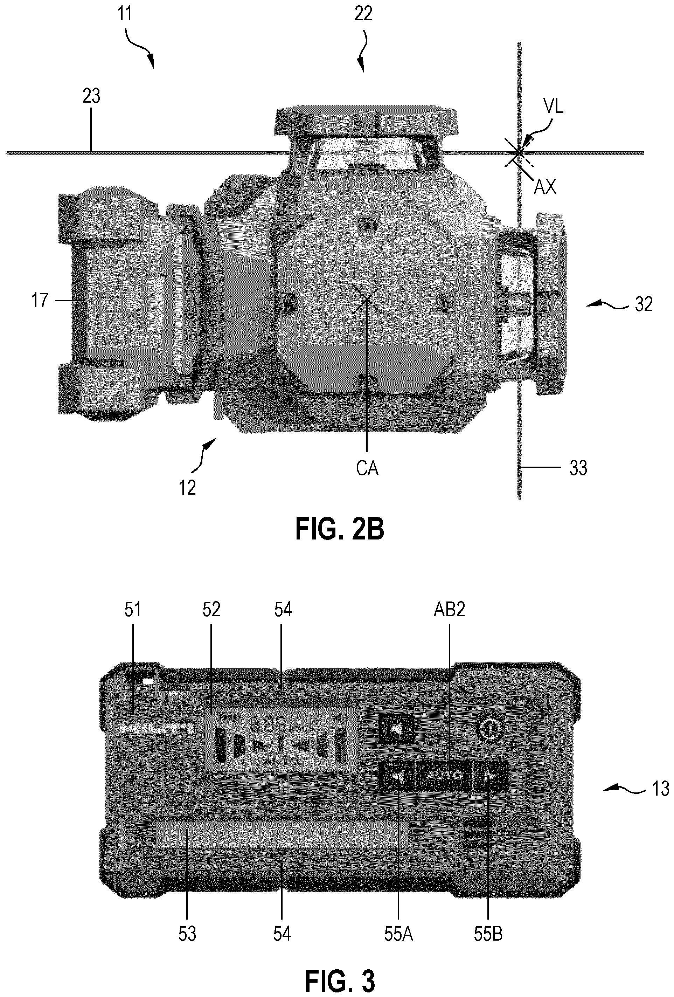

**FIGS. 2A****, B** show the laser level tool 15 of the laser level system 10 of FIG. 1 in a side view (FIG. 2A) and in a top view (FIG. 2B). The rotation base 12 is connected to the laser level 11 and configured to rotate the laser level 11 about an axis of rotation **AX** that is different from a central axis **CA** of the laser level tool 15.

The computer system 14 is configured to control the operation of the laser level 11, the rotation base 12, and the receiver 13, when the laser level system 10 is operated in a vertical auto alignment mode according to the present invention. The computer system 14 can be a microprocessor, a microcontroller or any other processing or controlling unit.

In the exemplary version, the computer system 14 is integrated into a processing and/or controlling unit of the laser level 11. Alternatively, the computer system may be integrated into a processing and/or controlling unit of the rotation base 12, or into a processing and/or controlling unit of the receiver 13. The concept of the vertical auto alignment mode according to the present invention can be used with any computer system that is configured to control the operation of the laser level 11, the rotation base 12, and the receiver 13 in the vertical auto alignment mode according to the present invention.

The laser level 11 includes a housing **16**, a laser generator (not shown) arranged in the housing 16, and a battery **17** that is removably attached to the housing 16, and the rotation base 12 includes a housing **18** and a motor (not shown) arranged in the housing 18. The laser level 11 and rotation base 12 can communicate in a wired manner.

The battery 17 may be a power tool battery which can also be coupled with power tools, such as drills, sanders, saws, etc., to provide power to those tools. The battery 17 houses a plurality of battery cells; the battery cells may be cylindrical lithium-ion battery cells or may have other battery chemistries or geometrics. Instead of a removable battery, the laser level may be powered by an internal battery that is coupled to the laser level.

The laser level 11 can create three green 360° laser beams, which can be switched on either separately or together. The laser generator may include three laser modules, which can be arranged on a pendulum assembly. The laser level 11 may include a locking device to lock the pendulum assembly. In those instances, the pendulum assembly will be locked in a particular position rather than allowed to level the laser generator under the influence of gravity and it may produce laser beams offset from the vertical and horizontal.

Each laser module may include a laser source such as a laser diode and a reflector such as a cone reflector. The laser diode produces a laser beam which is reflected at the surface of the cone reflector to project a laser beam at a laser projector. The laser level 11 includes three laser projectors, which are called first laser projector **22**, second laser projector **32**, and third laser projector **42**. The laser projectors 22, 32, 42 are protected openings through which the laser modules extend and project laser beams outside of the housing 16.

At the first laser projector 22, a first laser module can project a first laser beam **23** that is configured to define a first vertical laser beam, at the second laser projector 32, a second laser module can project a second laser beam **33** that is configured to define a second vertical laser beam, and at the third laser projector 42, a third laser module can project a third laser beam **43** that is configured to define a horizontal laser beam.

The first vertical laser beam 23, the second vertical laser beam 33, and the horizontal laser beam 43 are arranged perpendicular to each other. The first vertical laser beam 23 and second vertical laser beam 33 intersect each other at a vertical line **VL** that is arranged eccentric to the central axis CA of the laser level 11; the vertical line VL is coaxially arranged to the axis of rotation AX, about which the laser level 11 is rotated by the rotation base 12.

The axis of rotation AX is arranged outside of the housing 16 of the laser level 11 and outside of the housing 18 of the rotation base 12. The first vertical laser beam 23 and second vertical laser beam 33 are arranged perpendicular to each other and intersect each other at the vertical line VL. For the vertical auto alignment mode according to the present invention, the axis of rotation AX, about which the first vertical laser beam 23 and/or the second vertical laser beams 33 are rotated, must be placed at a second reference point of a reference line. Since the axis of rotation AX is coincident with the vertical line VL, the axis of rotation AX can be placed by means of the vertical line VL at the second reference point with high accuracy and in a time efficient manner.

The laser level may be a different type of laser level other than a 3 x 360° laser level. The concept of the vertical auto alignment mode according to the present invention requires the first vertical laser beam 23 and second vertical laser beam 33, the horizontal laser beam 43 is optional and can be used for other layouting and alignment work. The laser level may be a 2 x 360° laser level.

The laser level 11 creates green 360° laser beams. The laser level may create laser beams of a different color and/or a different angle of aperture. Green laser beams have a better visibility but create more heat impact to the laser level then red laser beams. For example, a cylindrical reflector can create a smaller angle of aperture then the cone reflector to project a 360° laser beam. The concept of the vertical auto alignment mode according to the present invention can be used with any color of the laser beams (either one color or different colors for the vertical laser beams) and any angle of aperture for the laser beams.

To switch the laser level system 10 to the vertical auto alignment mode, the laser level system includes an activator element **AB1** that is arranged at the rotation base 12; alternatively, the activator element may be arranged at the laser level 11. Additionally, the laser level system 10 includes a first operating element **19A** to define a clockwise rotation and a second operating element **19B** to define a counterclockwise rotation about the axis of rotation AX.

In the exemplary version, the activator element AB1, first operating element 19A and second operating element 19B are mechanical operating elements formed as buttons that are configured to be pressed and the first and second operating elements 19A, 19B are formed as separate operating elements. Alternatively, the first and second operating elements 19A, 19B may be integrated in one single operating element formed as wheel configured to be rotated (clockwise or counterclockwise), or rocker configured to be applied (one end for clockwise rotation and the other end for counterclockwise rotation). Instead of mechanical operating elements, the activator element AB1, the first operating element 19A and/or the second operating element 19B may be touch operating elements.

The activator element AB1 that is arranged at the laser level tool 15 can reduce the time the operator has to spend on walking between the receiver 13 and the laser level tool 15 during vertical alignment work. The laser level system 10 is used to visualize a right angle from a reference line. After visualizing the right angle on a floor, wall and/or ceiling, the right angle should be transferred, for example by creating a permanent mark using paint or chalk, to the floor, wall and/or ceiling. After the zero line of the receiver 13 has been placed at a reference point, the operator does not need to come back to the receiver 13 to apply the activator element.

**FIG. 3** shows the receiver 13 of the laser level system 10 of FIG. 1. The receiver 13 is configured to be used with the laser level tool 15 and to enable the vertical auto alignment mode according to the present invention.

The receiver 13 includes a housing **51**, a display **52** configured to display information to the operator, a detector **53** configured to receive a laser beam, and a zero line **54**. To switch the laser level system 10 to the vertical auto alignment mode, the receiver 13 further includes an activator element **AB2**. Additionally, the receiver 13 includes a first operating element **55A** to define a clockwise rotation and a second operating element **55B** to define a counterclockwise rotation about the axis of rotation AX.

To differentiate between the activator elements AB1, AB2, the activator element AB1 arranged at the rotation base 12 is called "first activator element", and the activator element AB2 arranged at the receiver 13 is called "second activator element". In the exemplary version of the laser level system 10, the first and second activator elements AB1, AB2 are configured to switch the laser level system 10 to the vertical auto alignment mode. Alternatively, the first activator element AB1 may be configured to switch the laser level system 10 to a first vertical auto alignment mode, and the second activator element AB2 may be configured to switch the laser level system 10 to a second vertical auto alignment mode that is different from the first vertical auto alignment mode.

In the exemplary version, the activator element AB2, first operating element 55A and second operating element 55B are mechanical operating elements formed as buttons that are configured to be pressed and the first and second operating elements 55A, 55B are formed as separate operating elements. Alternatively, the first and second operating elements 55A, 55B may be integrated in one single operating element formed as wheel configured to be rotated (clockwise or counterclockwise), or rocker configured to be applied (one end for clockwise rotation and the other end for counterclockwise rotation). Instead of mechanical operating elements, the activator element AB2, the first operating element 55A and/or the second operating element 55B may be touch operating elements.

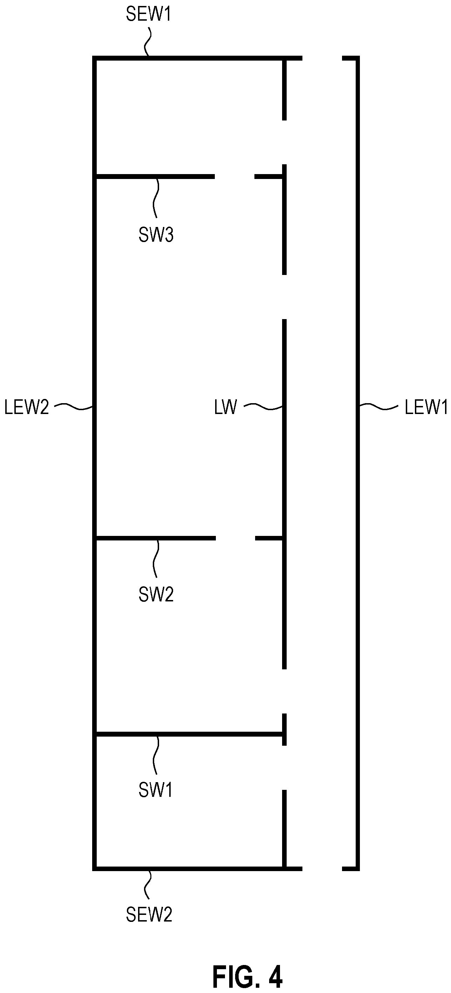

**FIG. 4** shows an example of a workflow for vertical alignment work of several walls in an indoor environment, in which a long wall **LW** and three short walls **SW1**, **SW2**, **SW3** should be visualized by the laser level system 10 of FIG. 1 and transferred by an operator to the indoor environment.

The indoor environment is limited by two long exterior walls, a first long exterior wall **LEW1** and a second long exterior wall **LEW2**, and by two short exterior walls, a first short exterior wall **SEW1** and a second short exterior wall **SEW2**. The long wall LW divides the indoor environment in a long corridor and an office space, and the three short walls SW1, SW2, SW3 divide the office space in three offices.

The long wall LW is parallel to the first and second long exterior walls LEW1, LEW2 and the three short walls SW1, SW2, SW3 are perpendicular to the long wall LW and the second long exterior wall LEW2.

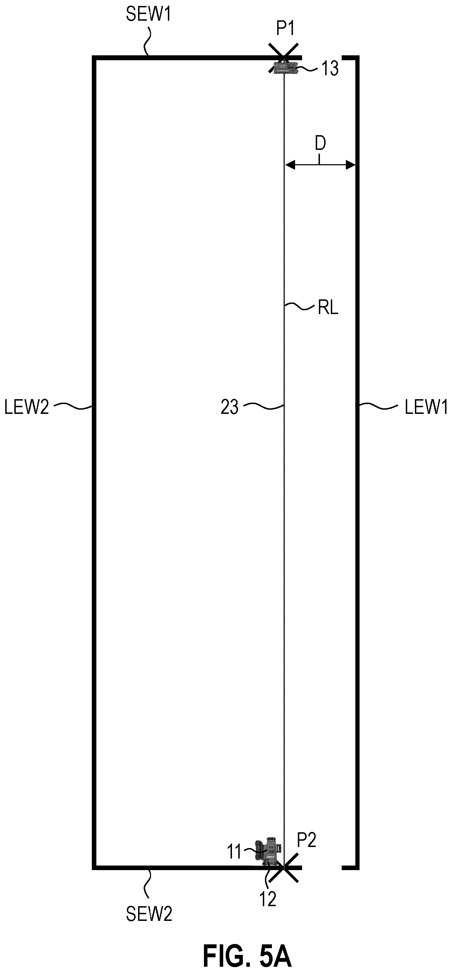

**FIGS. 5A-E** show in detail how the long wall LW and the three short walls SW1, SW2, SW3 can be visualized using the laser level system 10 including the laser level tool 15 and the receiver 13 to the indoor environment. The long wall LW and the short walls SW1, SW2, SW3 are visualized by the laser level system 10 in the vertical auto alignment mode.

FIG. 5A shows how the long wall LW can be transferred using the laser level system 10. The long wall LW is planned to be arranged parallel to the first long exterior wall LEW1 and to have a distance **D** to the first long exterior wall LEW1.

To transfer the long wall LW to the floor, a reference line **RL** is defined between a first reference point **P1** and a second reference point **P2**. The first and second reference points P1, P2 are located by measuring the distance D to the first long exterior wall LEW1 twice, at the first end to define the first reference point P1 and at the second end to define the second reference point P2. The receiver 13 is placed at the first reference point P1 such that the zero line 54 is coincident with the first reference point P1, and the laser level tool 15 is placed at the second reference point P2 such that the axis of rotation AX is coincident with the second reference point P2.

The vertical auto alignment mode of the laser level system 10 is started by applying the activator element AB1 and the direction of rotation is selected by applying either the first operating element 19A for a clockwise rotation or the second operating element 19B for a counterclockwise rotation. Instead of applying the first activator element AB1 at the laser level tool 15, the operator can apply the second activator element AB2 at the receiver 13 to start the vertical auto alignment mode.

In the vertical auto alignment mode, the laser level 11 is instructed by the computer system 14 to emit the vertical laser beam 23, and the rotation base 12 is instructed by the computer system 14 to rotate the laser level 11 about the axis of rotation AX until the vertical laser beam 23 is coincident with the zero line 54 of the receiver 13.

When the first vertical laser beam 23 is coincident with the zero line 54 of the receiver 13, the laser line that is created by the first vertical laser beam 23 on the floor visualizes the position and orientation of the long wall LW. The long wall LW can be transferred to the floor by creating a permanent mark **PM** using paint or chalk; the permanent mark PM is shown in FIG. 5A by a dashed line. After transferring the permanent mark PM to the floor, the vertical auto alignment mode can be deactivated by applying the first activator element AB1 at the laser level tool 15 or the second activator element AB2 at the receiver 13.

To further support the operator, the duty cycle of the vertical laser beam 23 can be changed in the vertical auto alignment mode. While the laser level 11 is rotated by the rotation base 12 about the axis of rotation AX to find the zero line 54 of the receiver 13, the operator is not involved such that good visibility of the vertical laser beam 23 is not required. When the vertical laser beam 23 is coincident with the zero line 54 of the receiver 13 and the reference line is visualized and should be transferred, the operator is involved, and the vertical laser beam 23 should be optimized towards good visibility for the operator.

To optimize the vertical laser beam 23 with respect to visibility for the operator and/or heat impact to the laser level tool 15, the vertical laser beam 23 can be switched to a receiver mode, while the laser level 11 is rotated by the rotation base 12, and in a visibility mode with higher brightness, when the vertical laser beam 23 is coincident with the zero line 54 of the receiver 13.

In order to visually inform the operator that the zero line 54 of the receiver 13 has been found and that the reference line is visualized, the vertical laser beam 23 can be switched to a highlight mode, in which the vertical laser beam 23 can blink for several seconds before it is switched to a permanently visible laser line that is optimized for visualizing (visibility mode).

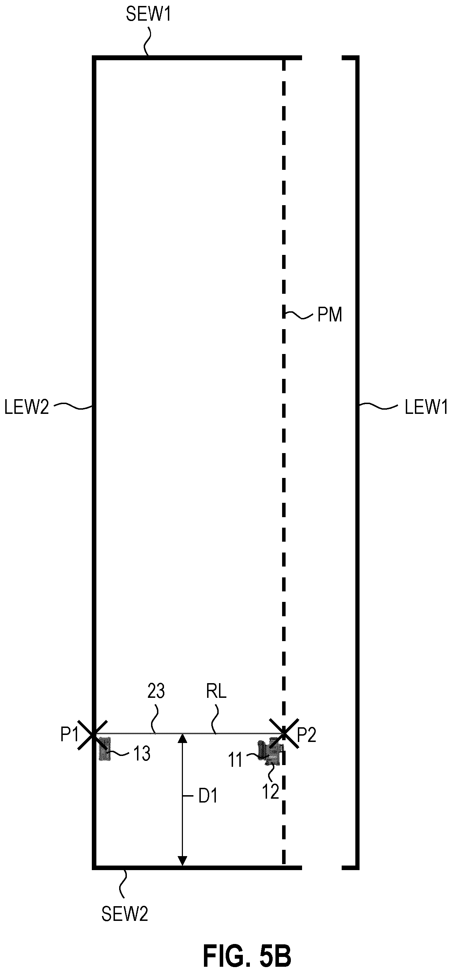

FIG. 5B shows how the first short wall SW1 can be transferred using the laser level system 10. The first short wall SW1 is planned to be arranged at a right angle to the long wall LW and to have a first distance **D1** to the second short exterior wall SEW2.

To transfer the first short wall SW1, the first distance D1 to the second short exterior wall SEW2 is measured twice, at the second long exterior wall LEW2 to locate a first reference point **P1** and at the long wall LW (permanent mark PM) to define a second reference point **P2**; the first and second reference points P1, P2 define the reference line RL that is visualized by the vertical laser beam 23 and should be transferred. The receiver 13 is placed at the first reference point P1 such that its zero line 54 is coincident with the first reference point P1, and the laser level tool 15 is placed at the second reference point P2 such that its axis of rotation AX is coincident with the second reference point P2.

The vertical auto alignment mode is started by applying the activator element AB1 at the laser level tool 15 and the direction of rotation is selected by applying either the first operating element 19A for a clockwise rotation or the second operating element 19B for a counterclockwise rotation. Instead of applying the first activator element AB1 at the laser level tool 15, the operator can apply the second activator element AB2 at the receiver 13 to start the vertical auto alignment mode.

The laser level 11 is rotated by the rotation base 12 about the axis of rotation AX until the vertical laser beam 23 is coincident with the zero line 54 of the receiver 13. When the vertical laser beam 23 is coincident with the zero line 54, the vertical laser beam 23 is arranged coincidently with the reference line. The first short wall SW1 can be transferred to the floor by creating a permanent mark **PM1** using paint or chalk. After transferring the permanent mark PM1 to the floor, the vertical auto alignment mode can be deactivated by applying the first activator element AB1 at the laser level tool 15 or the second activator element AB2 at the receiver 13.

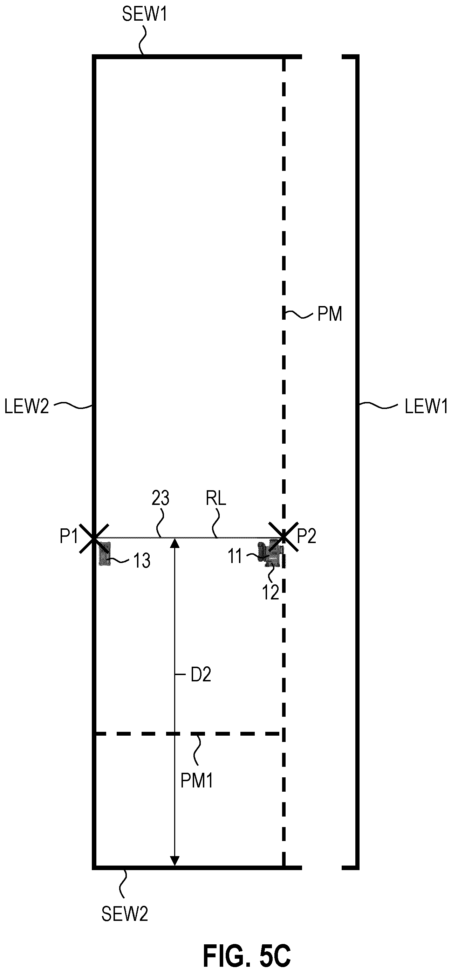

FIG. 5C shows how the second short wall SW2 is transferred by the laser level system 10. The second short wall SW2 is planned to be arranged at a right angle to the long wall LW and to have a second distance **D2** to the second short exterior wall SEW2.

To transfer the second short wall SW2, the second distance D2 to the second short exterior wall SEW2 is measured twice, at the second long exterior wall LEW2 to locate a first reference point **P1** and at the long wall LW (permanent mark PM) to define a second reference point **P2**; the first and second reference points P1, P2 define the reference line that is visualized by the vertical laser beam 23 and should be transferred. The receiver 13 is placed at the first reference point P1 such that its zero line 54 is coincident with the first reference point P1, and the laser level tool 15 is placed at the second reference point P2 such that its axis of rotation AX is coincident with the second reference point P2.

The vertical auto alignment mode is started by applying the first or second activator element AB1, AB2. The laser level 11 is rotated by the rotation base 12 about the axis of rotation AX to find the zero line 54 of the receiver 13 and to align the vertical laser beam 23 coincidently with the zero line 54 of the receiver 13. When the vertical laser beam 23 is arranged coincidently with the zero line 54, the vertical laser beam 23 visualizes the reference line and the second short wall SW2 can be transferred to the floor by creating a permanent mark **PM2** using paint or chalk. After transferring the permanent mark PM2 to the floor, the vertical auto alignment mode can be deactivated by applying the first activator element AB1 at the laser level tool 15 or the second activator element AB2 at the receiver 13.

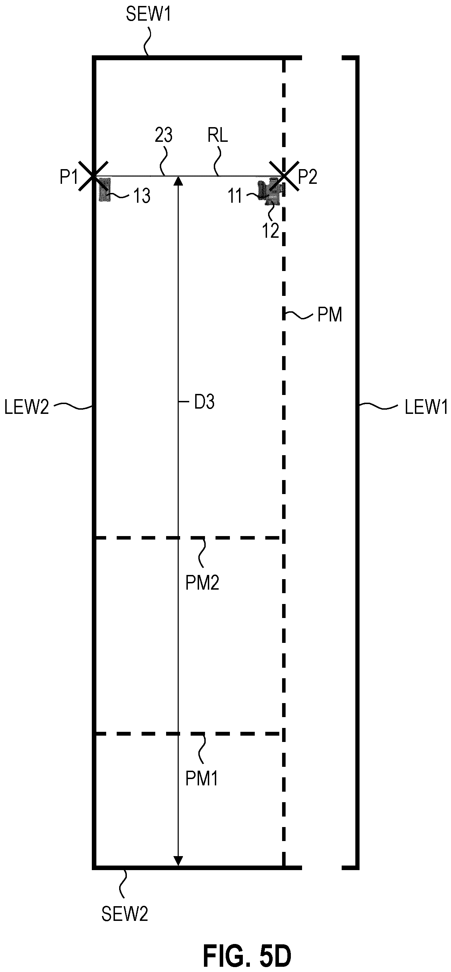

FIG. 5D shows how the third short wall SW3 is transferred by the laser level system 10. The third short wall SW3 is planned to be arranged at a right angle to the long wall LW and to have a third distance **D3** to the second short exterior wall SEW2.

To transfer the third short wall SW3, the third distance D2 to the second short exterior wall SEW2 is measured twice, at the second long exterior wall LEW2 to locate a first reference point **P1** and at the long wall LW (permanent mark PM) to define a second reference point **P2**; the first and second reference points P1, P2 define the reference line that is visualized by the vertical laser beam 23 and should be transferred. The receiver 13 is placed at the first reference point P1 such that its zero line 54 is coincident with the first reference point P1, and the laser level tool 15 is placed at the second reference point P2 such that its axis of rotation AX is coincident with the second reference point P2.

The vertical auto alignment mode is started by applying the first or second activator element AB1, AB2. The laser level 11 is rotated by the rotation base 12 about the axis of rotation AX to find the zero line 54 of the receiver 13 and to align the vertical laser beam 23 coincidently with the zero line 54 of the receiver 13. When the vertical laser beam 23 is arranged coincidently with the zero line 54, the vertical laser beam 23 visualizes the reference line and the third short wall SW3 can be transferred to the floor by creating a permanent mark **PM3** using paint or chalk. After transferring the permanent mark PM3 to the floor, the vertical auto alignment mode can be deactivated by applying the first activator element AB1 at the laser level tool 15 or the second activator element AB2 at the receiver 13.

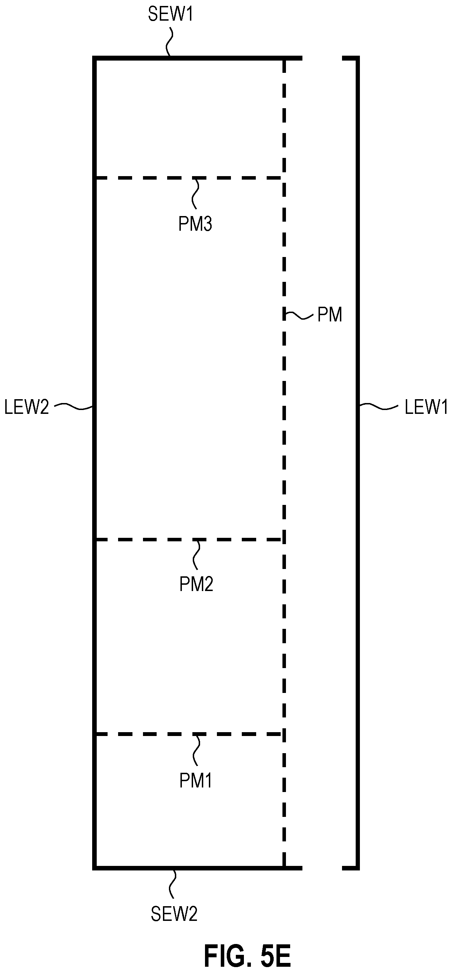

FIG. 5E shows the indoor environment of FIG. 4, in which the long wall LW and the three short walls SW1, SW2, SW3 are transferred by the laser level system 10 using the vertical auto alignment mode according to the present invention.

The vertical alignment work shown in FIGS. 5A-D can be done by a single operator in a time efficient manner with high accuracy. The vertical auto alignment mode of the laser level system 10 according to the present invention can reduce the time effort that is necessary for vertical alignment work.

To visualize and transfer the long wall LW and the three short walls, the receiver 13 and the laser level tool 15 are placed at the first and second reference points P1, P2 and the vertical auto alignment mode is started by either pressing the first activator button AB1 at the laser level tool 15 or the second activator button AB2 at the receiver 13.

When the first or second activator element AB1, AB2 has been applied, the vertical laser beam 23 is switched to a receiver mode that is different from a visibility mode of the vertical laser beam. By switching the vertical laser beam to a receiver mode, the vertical laser beam can be optimized to the receiver 13 and the heat impact to the inside of the laser level 11 can be reduced. While the laser level 11 is rotated by the rotation base 12 about the axis of rotation, the operator is not involved such that good visibility of the vertical laser beam is not required. When the vertical laser beam is coincident with the zero line, the operator is involved, and the vertical laser beam is switched to a highlight mode or a visibility mode. In the highlight mode, the vertical laser beam can blink for several seconds before it is switched to a permanent laser line that is optimized for visualizing (visibility mode)

## Claims

1. A method for visualizing a reference line (RL) using a laser level system (10) including a laser level (11) configured to emit a vertical laser beam (23), a rotation base (12) configured to rotate the laser level (11) about an axis of rotation (AX), a receiver (13), and a computer system (14), the reference line (RL) being defined by a first reference point (P1), at which a zero line (54) of the receiver (13) is placed, and a second reference point (P2), at which the axis of rotation (AX) of the rotation base (12) is placed, the method being performed by the computer system (14) and comprising the steps:
▪ Awaiting an activator element (AB1; AB2) to be applied,
▪ When the activator element (AB1; AB2) has been applied, instructing the laser level (11) to emit the vertical laser beam (23), and
▪ Instructing the rotation base (12), that is motorized and to which the laser level (11) is connected, to rotate the laser level (11) about the axis of rotation (AX) until the vertical laser beam (23) is coincident with the zero line (54) of the receiver (13), wherein the axis of rotation (AX) is coincident with the vertical laser beam (23).

2. The method of claim 1, wherein the vertical laser beam (23) is switched to a receiver mode, when the activator element (AB1; AB2) has been applied.

3. The method of any one of claims 1 to 2, wherein the vertical laser beam (23) is switched to a highlight mode, when the vertical laser beam (23) is coincident with the zero line (54) of the receiver (13).

4. A computer program comprising instructions, which, when executed by a computer system (14), cause the computer system (14) to carry out the method for visualizing a reference line (RL) according to any one of claims 1 to 3.

5. A laser level system (10) comprising means for carrying out the method for visualizing a reference line (RL) according to any one of claims 1 to 3.

6. A laser level system (10) configured to visualize a reference line (RL) defined by a first reference point (P1) and a second reference point (P2), the laser level system (10) comprising:
▪ a laser level (11) configured to emit a vertical laser beam (23),
▪ a rotation base (12) configured to be connected to the laser level (11), wherein the rotational base (12) is motorized and configured to rotate the laser level (11) about an axis of rotation (AX),
▪ a receiver (13) including a detector (53) and a zero line (54), and
▪ a computer system (14) configured to control the operation of the laser level (11), the rotation base (12), and the receiver (13),
**characterized in that** the axis of rotation (AX) is coincident with the vertical laser beam (23).

7. The laser level system of claim 6, wherein the axis of rotation (AX) is arranged outside of a housing (16) of the laser level (11) and outside of a housing (18) of the rotation base (12).

8. The laser level system of any one of claims 6 to 7, further including at least one activator element (AB1; AB2) that is configured to switch the laser level system (10) to a vertical auto alignment mode, in which the computer system (14) is configured to:
▪ Instruct the laser level (11) to emit the vertical laser beam (23), and
▪ Instruct the rotation base (12) to rotate the laser level (11) about the axis of rotation (AX) until the vertical laser beam (23) is coincident with the zero line (54) of the receiver (13).

9. The laser level system of claim 8, wherein the at least one activator element (AB1; AB2) is arranged at the laser level (11) or the rotation base (12).

10. The laser level system of any one of claims 8 to 9, further including at least one operating element (19A, 19B; 55A, 55B) that is configured to define a direction of rotation, in which the rotation base (12) is instructed to rotate the laser level (11) about the axis of rotation (AX) in the vertical auto alignment mode.

11. The laser level system of any one of claims 6 to 7, further including at least one activator element (AB1; AB2) that is configured to switch the laser level system (10) to a first vertical auto alignment mode or to a second vertical auto alignment mode that is different from the first vertical auto alignment mode.
